# FASCICULE DE BREVET EUROPEEN

(11) **EP 3 891 415 B1**
(45) Date de publication et mention de la délivrance du brevet: **12.10.2022**
(21) Numéro de dépôt: 19831791.9
(22) Date de dépôt: 20.11.2019
(51) Int. Cl.: F16F 9/54, B60G 13/00

(54) **CORPS D'AMORTISSEUR POUR AMORTISSEUR DE TRAIN AVANT DE VEHICULE**
STOSSDÄMPFERKÖRPER FÜR STOSSDÄMPFER FÜR FAHRZEUGVORDERACHSE
SHOCK ABSORBER BODY FOR VEHICLE FRONT-AXLE SHOCK ABSORBER

(30) Priorité: 05.12.2018 FR 1872392
(43) Date de publication de la demande: 13.10.2021
(73) Titulaire: Coparl, 80250 Ailly-sur-Noye (FR)
(72) Inventeur: PILASTRE, Guillaume, 80000 AMIENS (FR)
(74) Mandataire: Plasseraud IP
(86) Numéro de dépôt international: PCT/FR2019/052766
(87) Numéro de publication internationale: WO 2020/115388

(56) Documents cités:
- EP-A1- 3 196 504
- WO-A1-2014/128131
- DE-A1-102010 028 290
- FR-A1- 3 026 058
- FR-A3- 3 057 925
- JP-A- H0 754 896

## Description

### Domaine technique

La présente invention est relative à un corps d'amortisseur pour un amortisseur pour train avant de véhicule, et notamment de véhicule automobile, ainsi qu'à un amortisseur de train avant de véhicule comprenant un tel corps d'amortisseur.

Le domaine de l'invention est celui des amortisseurs pour véhicule automobile, employés pour assurer la suspension du train avant du véhicule.

### Technique antérieure

De façon bien connue, les amortisseurs de véhicule, et notamment ceux prévus pour assurer la suspension du train avant du véhicule, comprennent un corps d'amortisseur couplé, au niveau d'une première extrémité, à un pivot de l'une des roues d'un train avant du véhicule, et, un piston fixé sur une tige de piston, le piston coulissant à l'intérieur dudit corps d'amortisseur.

Ces corps d'amortisseur comprennent généralement, dans une partie supérieure, une coupelle servant de surface d'appui pour les spires inférieures d'un ressort de suspension, à l'intérieur duquel s'étend la tige recevant le piston.

Ils supportent ainsi l'avant du véhicule, via les ressorts de suspension, et permettent également le braquage des roues, en effectuant un mouvement de rotation selon l'axe de l'amortisseur. Ils sont également particulièrement sollicités mécaniquement, en particulier lors du freinage ou de l'accélération du véhicule, mais également dans les virages, et notamment dans le cas où ledit amortisseur est employé dans un montage de type Macpherson.

De ce fait ils doivent être aptes à présenter une rigidité suffisante pour ne pas subir de déformation trop importante à cause de ces différentes sollicitations, ce qui pourrait engendrer une perte du plan de roue dont dépend le comportement routier du véhicule.

Afin de remplir cet objectif, les corps d'amortisseur sont classiquement réalisés sous forme de pièce monobloc en métal, par exemple en acier.

Néanmoins, de tels corps d'amortisseur présentent un poids important, ce qui nuit aux objectifs de réduction de la consommation des véhicules, et donc de diminution de la pollution engendrée par les véhicules.

Pour pallier à cet inconvénient, on connaît par exemple du document WO 2014/128131 A1 un amortisseur pour train avant de véhicule muni d'un corps de force, configuré comme une jambe de force, comportant :
- une partie interne métallique munie d'une première extrémité supérieure et d'une première extrémité inférieure,
- une partie externe surmoulée sur la partie interne hormis, au moins, sur sa première extrémité supérieure, réalisée dans un matériau composite, avec, en partie intermédiaire, une coupelle définissant une surface d'appui pour un ressort de suspension, et une seconde extrémité inférieure comprenant deux ailes sensiblement parallèles formant une chape et configurées pour être solidarisées à un pivot du train avant.

Certaines parties fonctionnelles, nécessitant de présenter une résistance particulièrement importante, comme par exemple les ailes peuvent présenter des renforts métalliques positionnés en dehors de la partie externe surmoulée.

Selon les constatations de la Demanderesse, un tel corps d'amortisseur, réalisé entièrement en matériau composite, pour ce qui concerne la partie externe, même si il présente une résistance équivalente à celle d'un corps d'amortisseur réalisé intégralement en matériau métallique avec un poids réduit, présente néanmoins un coût de revient important, notamment en ce que les matériaux composites permettant d'obtenir la résistance mécanique souhaitée sont plus onéreux que les matériaux métalliques employés initialement pour la réalisation de ces corps d'amortisseur.

### Problème technique

L'objectif de la présente invention est donc de proposer un corps d'amortisseur, et notamment une jambe de force, pour un amortisseur de train avant d'un véhicule de conception simple, avec une résistance mécanique optimale et un poids faible et présentant un plus faible coût de revient.

### Exposé de l'invention

L'invention concerne un corps d'amortisseur pour un amortisseur de train avant de véhicule comprenant :
- une partie interne, réalisée en matériau métallique, comprenant une section tubulaire présentant une extrémité supérieure et une extrémité inférieure,
- une partie tubulaire externe réalisée en matériau composite, présentant une extrémité supérieure et une extrémité inférieure, surmoulée sur la section tubulaire de ladite partie interne, en particulier de telle sorte qu'une portion supérieure de la partie interne, au niveau de son extrémité supérieure, soit positionnée entièrement à l'extérieur de ladite partie tubulaire externe,
ladite partie tubulaire externe comportant une chape, au niveau de son extrémité inférieure, configurée de sorte à être solidarisée à un pivot de roue du train avant du véhicule, comportant deux ailes sensiblement parallèles,
une coupelle définissant une surface d'appui pour un ressort de suspension étant positionnée sur ladite partie tubulaire externe, à proximité de l'extrémité supérieure.

Selon l'invention :
- ladite coupelle est réalisée en matériau métallique, et/ou
- ladite partie interne comporte une portion de rigidification, réalisée en matériau métallique, configurée de sorte à être recouverte par le matériau composite de ladite partie tubulaire externe, au niveau de la chape et s'étendant en insert dans le matériau composite des deux ailes de la chape.

Avantageusement réaliser :
- la coupelle en métal (et non en matériau composite comme dans l'antériorité WO 2014/128131 A1) permet de réduire fortement le coût de fabrication grâce à une moindre utilisation de matériau composite, et sans augmenter significativement le poids du corps d'amortisseur,
- la chape avec ses deux ailes, comme comprenant une enveloppe externe en matériau composite avec une portion de rigidification métallique s'étendant en insert dans les deux ailes permet avantageusement de réduire significativement le coût de fabrication par une moindre utilisation de matériau composite, et comparativement à la chape intégralement en matériau composite décrite dans le document WO 2014/128131 A1.

Ces deux dispositions, permettant de réduire la quantité de matériau composite utilisé au niveau de la coupelle et au niveau de la chape, peuvent être le cas échéant combinées pour optimiser la réduction du coût de fabrication du corps d'amortisseur.

Selon des caractéristiques optionnelles de l'invention, prises seules ou en combinaison :
- ladite coupelle est réalisée en matériau métallique ;
- ladite partie interne comporte ladite portion de rigidification, réalisée en matériau métallique, configurée de sorte à être recouverte intégralement par le matériau composite de ladite partie tubulaire externe, au niveau de la chape ;
- la coupelle est réalisée dans une tôle métallique d'épaisseur comprise entre 0,5 mm et 3 mm, de préférence entre 1 et 2 mm ;
- ladite portion de rigidification est réalisée sous la forme d'une tôle métallique amovible, avec une portion de fixation configurée de sorte à venir enserrer ladite partie interne et une portion fonctionnelle configurée de sorte à être recouverte intégralement par le matériau composite de la chape de la partie tubulaire externe ;
- au moins un plot (deux ou plus) est ménagé en saillie sur ladite partie interne, à proximité de ladite extrémité inférieure, en particulier sur la portion de rigidification, configuré de sorte à permettre de s'assurer du recouvrement de la partie interne par le matériau composite de la partie tubulaire externe, lors du moulage de la partie tubulaire externe sur la partie interne, avec une épaisseur au moins égale à la longueur du plot, ladite partie tubulaire externe comporte, à proximité de l'extrémité supérieure, une patte de fixation, configurée de sorte à être solidarisée à une barre anti-dévers du train avant du véhicule, ladite patte de fixation comprenant un insert en matériau métallique recouvert intégralement par le matériau composite de ladite patte de fixation ;
- chacune desdites ailes de la chape comporte deux faces planes parallèles, deux perçages traversant, de forme et sensiblement cylindrique, s'étendant entre les deux faces planes parallèles étant prévus dans chacune des ailes, une bague métallique, de forme sensiblement cylindrique, étant positionnée et maintenue à force à l'intérieur de chacun des perçages traversant, de sorte que chacune des extrémités longitudinales de ladite bague métallique se trouve en retrait à l'intérieur de chacune des ailes, entre les deux faces planes ;
- des nervures de rigidification sont ménagées sur ladite partie tubulaire externe, à proximité de l'extrémité supérieure, lesdites nervures de rigidification étant configurées de sorte à recevoir en appui une face inférieure de ladite coupelle ;
- ledit corps d'amortisseur comprend ladite portion de rigidification et la partie en matériau composite de la chape présente, au niveau de chaque aile, une ou plusieurs cavités s'étendant partiellement suivant l'épaisseur de ladite aile,
- une portion d'extrémité inférieure de la section tubulaire de la partie interne, au niveau de l'extrémité inférieure, s'étendant depuis ladite extrémité inférieure est de diamètre réduit par rapport au diamètre du reste de la section tubulaire, un bouchon, de diamètre extérieur strictement supérieur au diamètre de portion d'extrémité inférieure de la section tubulaire, étant fixé au niveau de ladite extrémité inférieure, de sorte à former une cavité circulaire, au niveau de l'extrémité inférieure de la section tubulaire, remplie par le matériau composite de la partie tubulaire externe.

L'invention concerne également un amortisseur de train avant de véhicule comprenant :
- un corps d'amortisseur selon l'invention,
- un piston fixé sur une tige de piston,
dans lequel, le piston coulisse à l'intérieur de la section tubulaire de la partie interne dudit corps d'amortisseur.

### Brève description des dessins

D'autres caractéristiques, détails et avantages de l'invention apparaîtront à la lecture de la description détaillée ci-après, et à l'analyse des dessins annexés, sur lesquels :
**Fig. 1**

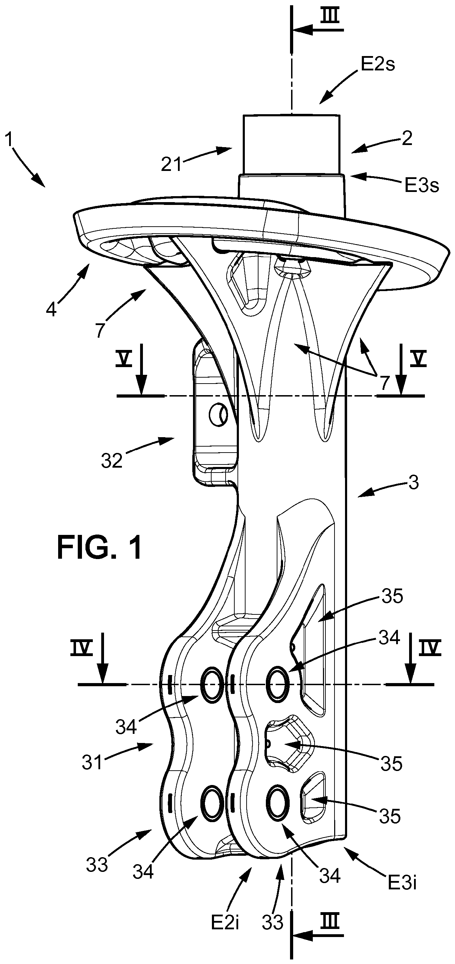

   [Fig. 1] représente une vue en perspective d'un corps d'amortisseur selon un mode de réalisation conforme à l'invention,
**Fig. 2**

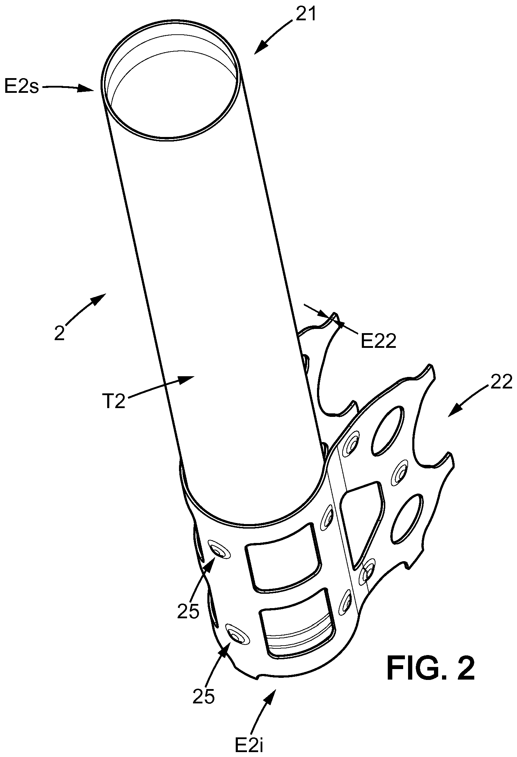

   [Fig. 2] représente une vue en perspective de la partie interne du corps d'amortisseur de la figure 1,
**Fig. 3**

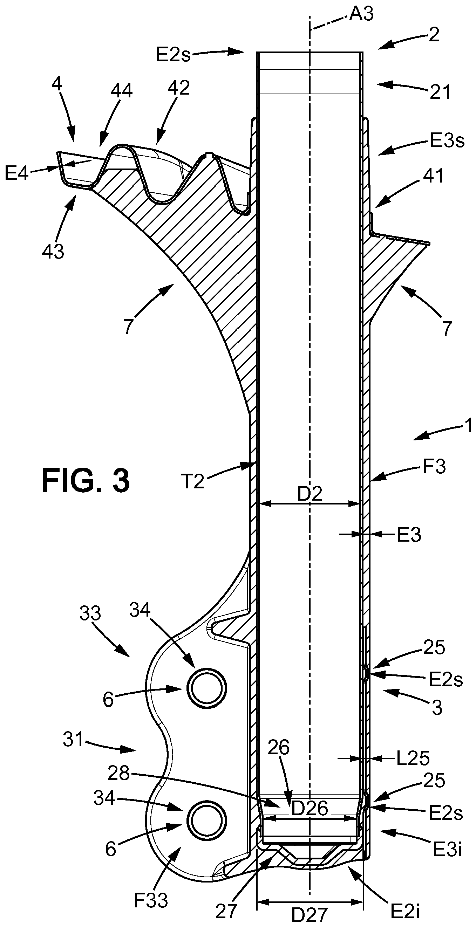

   [Fig. 3] représente une vue en coupe selon la ligne III-III du corps d'amortisseur de la figure 1,
**Fig. 4**

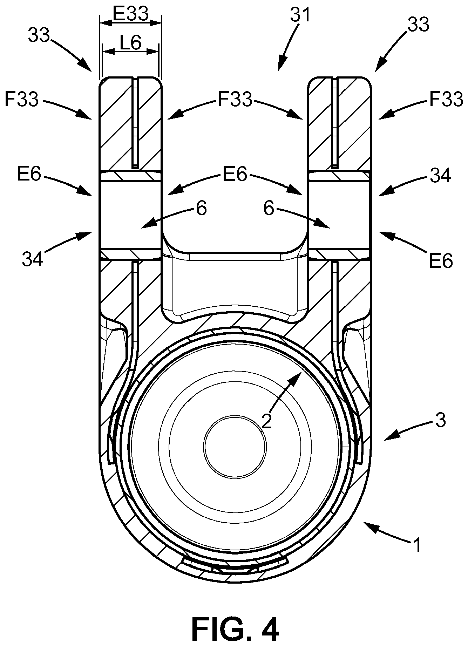

   [Fig. 4] représente une vue en coupe selon la ligne IV-IV du corps d'amortisseur de la figure 1,
**Fig. 5**

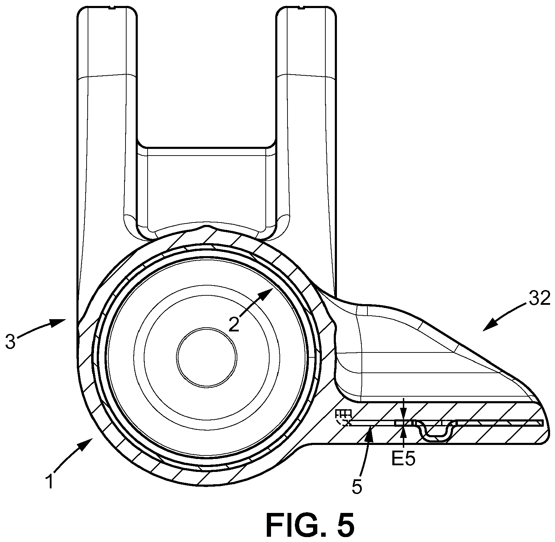

   [Fig. 5] représente une vue en coupe selon la ligne V-V du corps d'amortisseur de la figure 1,
**Fig. 6**

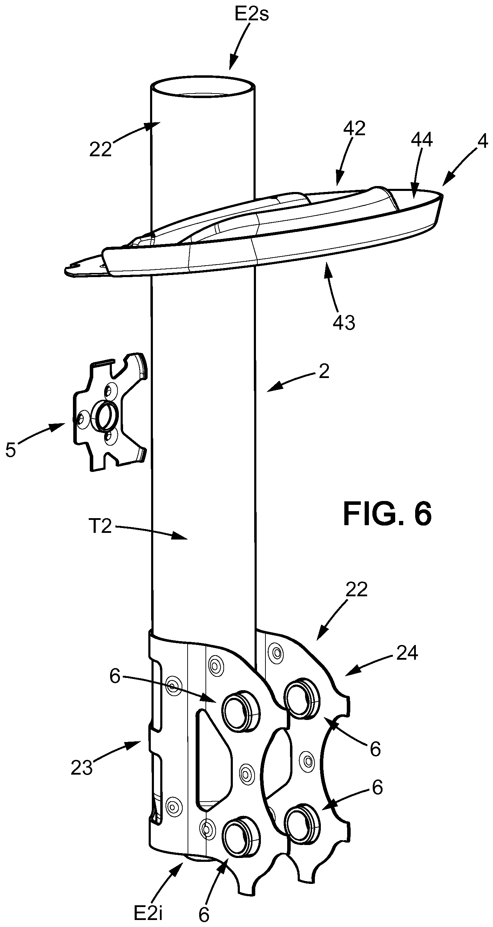

   [Fig. 6] représente une vue en perspective du corps d'amortisseur de la figure 1 dans lequel la partie tubulaire externe a été enlevée,
**Fig. 7**

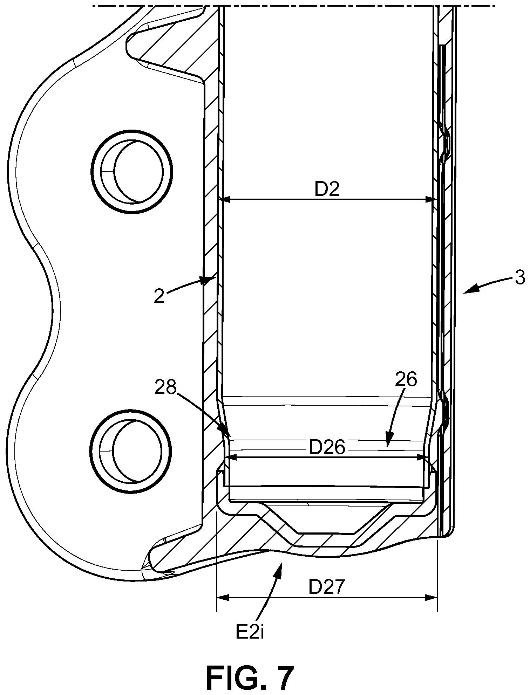

   [Fig. 7] représente un agrandissement de la partie inférieure de la figure 3.

### Description des modes de réalisation

L'invention concerne un corps d'amortisseur 1 pour un amortisseur de train avant de véhicule comprenant :
- une partie interne 2, réalisée en matériau métallique, comprenant une section tubulaire T2 présentant une extrémité supérieure E2s et une extrémité inférieure E2i,
- une partie tubulaire externe 3 réalisée en matériau composite, présentant une extrémité supérieure E3s et une extrémité inférieure E3i, surmoulée sur la section tubulaire T2 de ladite partie interne 2, en particulier de telle sorte qu'une portion supérieure 21 de la section tubulaire de la partie interne 2, au niveau de son extrémité supérieure E2s, soit positionnée entièrement à l'extérieur de ladite partie tubulaire externe 3.

Comme visible à la figure 4, et de manière générale, la partie tubulaire externe 3 en matériau composite peut s'étendre en recouvrant la section tubulaire T2 de la partie interne 2, depuis son extrémité supérieure E3s et jusqu'à son extrémité inférieure E3i qui s'étend à niveau de l'extrémité inférieure E2i de la section tubulaire la partie interne 2.

Ladite partie tubulaire externe 3 comporte une chape 31, au niveau de son extrémité inférieure E3i, configurée de sorte à être solidarisée à un pivot de roue du train avant du véhicule, comportant deux ailes 33 qui s'étendent selon une direction sensiblement perpendiculaire à l'axe A3 de la partie tubulaire externe 3.

Une coupelle 4 définissant une surface d'appui pour un ressort de suspension est positionnée sur ladite partie tubulaire externe 3, à proximité de l'extrémité supérieure E3s.

Selon l'invention :
- ladite coupelle 4 est réalisée en matériau métallique, et/ou
- ladite partie interne 2 comporte une portion de rigidification 22, réalisée en matériau métallique, configurée de sorte à être recouverte (notamment intégralement) par le matériau composite de ladite partie tubulaire externe 3, au niveau de la chape 31. Cette portion de rigidification 22 s'étend en saillie à partir de la section tubulaire T2 de la partie interne 2 et en insert dans le matériau composite des deux ailes 33 de la chape 3.

Ainsi, dans le corps d'amortisseur 1 selon un mode de réalisation de l"Invention, la quantité de matériau composite nécessaire à la réalisation de la partie tubulaire externe 3 est réduite, en ce que la présence d'une coupelle 4 métallique remplace celle d'une coupelle en matériau composite, comme dans les corps d'amortisseur de l'état de la technique, et notamment dans celui décrit dans le document WO 2014/128131 A1, avec une résistance mécanique au moins équivalente, si ce n'est supérieure.

De même l'emploi de ladite portion de rigidification 22 en matériau métallique, positionnée à l'intérieur de la chape 31 permet de réduire la quantité de matériau composite employé pour la réalisation de la chape 31, et de garantir à ladite chape 31 une résistance mécanique au moins équivalente, si ce n'est supérieur à celle d'un corps d'amortisseur avec une partie tubulaire en matériau composite et dépourvu d'une telle portion de rigidification au niveau de la chape.

En effet, dans le cas d'un tel corps d'amortisseur, des nervures sont généralement prévues afin de renforcer ladite partie tubulaire externe au niveau de ladite chape, tel que décrit par exemple dans le document WO 2014/128131.

L'emploi de la portion de rigidification 21 permet avantageusement de supprimer ces nervures et donc de diminuer la quantité de matériau composite nécessaire à la réalisation de la partie tubulaire externe 3 au niveau de ladite chape 31.

De plus, et selon un mode de réalisation de l'invention, la partie en matériau composite de la chape 31 peut présenter une ou plusieurs cavités 35 permettant de réduire plus encore l'utilisation de matériau composite. Ainsi et comme visible de la figure 1 on distingue nettement trois cavités 35 dans l'aile 33 droite de la chape 31 qui s'étendent chacune partiellement suivant l'épaisseur E33 des ailes 33 de la chape 31. L'une de ces cavités est visible à la vue de coupe de la figure 5.

De manière générale la ou les cavités 35 peuvent s'étendre partiellement suivant l'épaisseur E33 des ailles 33 de la chape 31 et de préférence sans découvrir la portion de rigidification 22 métallique.

Par ailleurs, en employant pour ladite coupelle métallique 4 et/ou pour ladite portion de rigidification 21 un acier ou encore un matériau métallique avec de l'aluminium, le poids du corps d'amortisseur 1 demeure sensiblement identique à celui des amortisseurs de l'état de la technique comprenant une portion tubulaire externe réalisée intégralement en matériau composite.

Le matériau métallique employé pour la réalisation de la coupelle 4 ou de la portion de rigidification 21 peut ainsi être par exemple de l'aluminium, ou encore de l'acier, notamment à haute limite élastique (HLE) ou à haute résistance (HR).

Le matériau composite employé pour la portion tubulaire externe 3 peut par exemple comporter une matrice de vinyle ester, de polyester ou d'époxy, voire même être une matrice thermoplastique, et des fibres de verre, de lin ou encore de carbone, ainsi qu'une ou plusieurs charges minérales, selon les propriétés mécaniques souhaitées pour le corps d'amortisseur 1 selon l'invention, et notamment pour sa partie tubulaire externe 3.

Ainsi, pour un poids équivalent du corps d'amortisseur 1 selon l'invention par rapport aux corps d'amortisseur de l'état de la technique, dont la chape et/ou la coupelle est réalisée intégralement en matériau composite, le coût de revient peut être significativement réduit, en ce que les matériaux métalliques sont moins onéreux que les matériaux composites avec des performances mécaniques équivalentes, voire supérieures.

Selon un mode de réalisation, ladite coupelle 4 est réalisée en matériau métallique.

Comme visible plus particulièrement sur l'exemple de réalisation de la figure 1, ladite coupelle métallique 4 peut être fixée sur ladite partie tubulaire externe 3 en étant insérée autour ladite partie tubulaire externe 3.

Comme visible sur l'exemple de réalisation de la figure 3, la coupelle 4 peut comporter à cet effet une ouverture centrale 41, configurée de sorte à recevoir la partie tubulaire externe 3.

Par exemple, ladite ouverture centrale 41 peut être de forme sensiblement circulaire, configurée de sorte que ladite coupelle 4 soit maintenue de ladite partie tubulaire externe 3 par frottement.

Alternativement, ou en complément, des moyens de fixation supplémentaires, comme par exemple des rivets ou des vis de fixation, peuvent être prévus afin d'assurer la fixation de la coupelle 4 à la partie tubulaire externe 3.

Avantageusement, le rebord de la section tubulaire T2 au niveau de son extrémité supérieure E2s peut être replié vers l'intérieur de ladite section tubulaire, notamment afin de constituer un arrêt en translation pour les éléments se trouvant à l'intérieur de ladite section tubulaire T2, ou encore pour refermer ladite section tubulaire T2 de la partie interne 2 au niveau de son extrémité supérieure E2s, de sorte à constituer un volume fermé étanche.

Selon un mode de réalisation, ladite partie interne 2 comporte une portion de rigidification 22, réalisée en matériau métallique, configurée de sorte à être recouverte intégralement par le matériau composite de ladite partie tubulaire externe 3, au niveau de la chape 31.

Comme visible sur les exemples de réalisation des figures 2 et 6, ladite portion de rigidification 22 peut être une pièce amovible par rapport à la partie tubulaire 2, et fixée à la section tubulaire T2 de ladite partie interne 2 par soudure, ou encore par l'intermédiaire de moyens de fixation, comme par exemple des rivets.

Alternativement, ladite portion de rigidification 22 peut être ménagée d'un seul tenant avec la section tubulaire T2 ladite partie interne 2.

Selon un mode de réalisation, la coupelle 4 est réalisée dans une tôle métallique d'épaisseur E4 comprise entre 0,5 mm et 3 mm, de préférence entre 1 et 2 mm. On notera qu'une telle épaisseur E4 comprise entre 1mm et 2 mm est inférieure à l'épaisseur des coupelles métalliques utilisées lorsque le corps d'amortisseur est, selon l'état de la technique bien connu, réalisé essentiellement en matière métallique.

Ainsi, la coupelle 4 du corps d'amortisseur 1 selon l'invention présente une épaisseur E4 plus faible que la coupelle d'un corps d'amortisseur dont la partie tubulaire externe est réalisée intégralement en matériau composite et ménagée d'un seul tenant sur ladite partie tubulaire externe du corps d'amortisseur, ce qui permet de réduire le poids de ladite coupelle 4, et de diminuer son coût de revient.

Cette possibilité est offerte par le fait qu'un matériau métallique, et notamment de l'aluminium, notamment de l'aluminium, ou encore de l'acier, notamment de type HLE ou HR permet d'obtenir une résistance mécanique équivalente, voire supérieure, au matériau composite pour une épaisseur de pièce plus faible.

Comme visible sur les exemples de réalisation des figures 1, 3 et 6, ladite coupelle 4 peut être obtenue par moulage, ou encore par des opérations d'emboutissage, avec notamment des découpes et des pliages.

Ladite coupelle 4 peut comporter une paroi supérieure 42, avec un siège 44, de préférence de forme circulaire, par exemple sous la forme d'une gorge circulaire 44 configurée de sorte à recevoir en appui la dernière spire inférieure d'un ressort d'amortisseur, ainsi qu'une paroi inférieure 43.

Selon un mode de réalisation, ladite portion de rigidification 22 est réalisée sous la forme d'une tôle métallique amovible, avec une portion de fixation 23 configurée de sorte à venir enserrer la section tubulaire T2 de ladite partie interne 2 et une portion fonctionnelle 24 configurée de sorte à être recouverte intégralement par le matériau composite de la chape 31 de la partie tubulaire externe 3.

Comme visible plus particulièrement sur les exemples de réalisation des figures 2 et 6, ladite portion de fixation 23 peut être de forme sensiblement cylindrique, de sorte à pouvoir épouser la forme de partie interne 2.

L'épaisseur E22 de la tôle constituant ladite portion de rigidification 22 peut être comprise entre 0,5 mm et 3 mm, de préférence entre 1 et 2 mm.

Une telle tôle peut être obtenue par différentes opérations d'emboutissage, comme par exemple des découpes et des pliages.

Selon un mode de réalisation, un, voire deux, plots 25 sont ménagés en saillie sur ladite partie interne 2, à proximité de ladite extrémité inférieure E2i, configurés de sorte à être recouverts, par la portion tubulaire externe 3. Ces plots 25 en saillie vers l'extérieur depuis la partie interne 2 permettent de s'assurer du recouvrement de la partie interne 2 par le matériau composite de la partie tubulaire externe lors du moulage de la partie tubulaire externe 3 sur la partie interne 2, et avec une épaisseur E3 égale au moins à la longueur L25 des plots.

De tels plots 25 servent avantageusement de témoin pour s'assurer de la qualité de la fabrication du corps d'amortisseur 1 selon l'invention.

En effet, comme visible plus particulièrement sur l'exemple de réalisation de la figure 3, les plots 25 peuvent être dimensionnés de telle sorte que leur recouvrement par le matériau composite de la portion tubulaire externe 3 correspond à l'obtention de l'épaisseur E3 de la portion tubulaire externe 3 souhaitée, notamment au cours du procédé de réalisation du corps d'amortisseur 1 selon l'invention, dans lequel la partie tubulaire externe 3 est surmoulée sur la partie interne 2.

Les plots 25 peuvent être configurés de sorte à être recouverts intégralement par le matériau composite de la portion tubulaire externe 3, ou alternativement, et comme visible sur l'exemple de réalisation de la figure 3, l'extrémité distale E25 des plots 25 peut venir affleurer avec la face extérieure F3 de la portion tubulaire externe 3.

Comme visible plus particulièrement sur l'exemple de réalisation de la figure 2, lesdits plots 25 peuvent être ménagés sur la tôle formant ladite portion de rigidification 22.

Alternativement, les plots 25 pourraient être ménagés directement sur la portion interne 2, au niveau de ladite portion de rigidification 22, ou ailleurs sur ladite portion interne 2.

Selon un mode de réalisation, ladite partie tubulaire externe 3 comporte, à proximité de l'extrémité supérieure E3s, une patte de fixation 32, configurée de sorte à être solidarisée à une barre anti-dévers du train avant du véhicule, ladite patte de fixation 32 comprenant un insert 5 en matériau métallique, recouvert intégralement par le matériau composite de ladite patte de fixation 32.

Ainsi, grâce à cette disposition avantageuse de l'invention, la quantité de matériau composite nécessaire à la réalisation d'un corps d'amortisseur 1 peut être réduite, en ce que, comme visible sur l'exemple de réalisation de la figure 5, l'insert métallique 5 permet d'obtenir une résistance mécanique satisfaisante pour ladite patte de fixation 32, avec une quantité moindre de matériau composite par rapport aux corps d'amortisseur de l'état de la technique dont la partie tubulaire externe, et notamment la patte de fixation configurée de sorte à être solidarisée à une barre anti-dévers du train avant du véhicule, est réalisée intégralement en matériau composite.

Cette disposition participe donc directement à la résolution du problème technique résolu par la présente invention, à savoir réduire le coût de revient d'un corps d'amortisseur pour un poids équivalent, en permettant de minimiser la quantité de matériau composite nécessaire à sa fabrication.

Comme visible sur l'exemple de réalisation de la figure 6, l'insert métallique 5 peut être réalisé sous la forme d'une pièce indépendante de la partie interne 2, par exemple sous la forme d'une tôle découpée et pliée selon la configuration souhaitée, la tôle présentant une épaisseur E5 comprise entre 0,5 mm et 3 mm, de préférence entre 1 mm et 2mm.

Alternativement, ledit insert métallique 5 pourrait également être fixé à ladite partie interne 2, voir ménagé d'un seul tenant avec celle-ci.

Ledit insert métallique 5 peut également être réalisé par exemple en aluminium, ou encore en acier, notamment de type HLE ou HR.

Selon un mode de réalisation, chacune desdites ailes 33 de la chape 31 comporte deux face planes F33 parallèles, deux perçages 34 traversant, de forme et sensiblement cylindrique, s'étendant entre les deux faces planes F33 parallèles étant prévus dans chacune des ailes 33, une bague métallique 6, de forme sensiblement cylindrique, étant positionnée et maintenue à force à l'intérieur de chacun des perçages 34 traversant, de sorte que chacune des extrémités longitudinales E6 de ladite bague métallique 6 se trouve en retrait à l'intérieur de chacune des ailes 33, entre les deux faces planes F33.

Comme visible sur l'exemple de réalisation de la figure 5, la longueur L6 des bagues métalliques 6 peut être ainsi légèrement inférieure à l'épaisseur E33 des ailes 33 de la chape 31.

les bagues métalliques 6 permettent avantageusement de renforcer mécaniquement la chape 31 au niveau des perçages 34 traversant, lesquels sont configurés pour recevoir des vis de fixation du pivot de roue, et se retrouvent donc fortement sollicités, et notamment en torsion avec un couple important.

De plus, en prévoyant de positionner les extrémités longitudinales E6 de la bague métallique 6 en retrait à l'intérieur de chacune des ailes 33 entre les deux faces planes F33, on limite le couple de serrage encaissé par les perçages 34 de chacune des ailes. Cela permet de réduire les phénomènes de fluage dans le matériau composite de ladite chape 31, et assure une meilleure tenue de l'assemblage vissé entre la chape 31 et le pivot de roue dans le temps.

Cela peut donc éventuellement permettre de réduire l'épaisseur E33 des ailes de ladite chape 31, et donc la quantité de matériau composite nécessaire à leur réalisation.

Selon un mode de réalisation, des nervures de rigidification 7 sont ménagées sur ladite partie tubulaire externe 3, à proximité de l'extrémité supérieure E3s, lesdites nervures de rigidification 7 étant configurées de sorte à recevoir en appui une face inférieure 43 de ladite coupelle 4.

Ainsi, les efforts transmis par le ressort de suspension à la coupelle 4 sont transmis auxdites nervures de rigidification 7, et ne sont donc pas encaissées seulement par ladite coupelle 4, ce qui permet de limiter son épaisseur E4, et donc son poids, et notamment quand celle-ci est réalisée en matériau métallique.

Les nervures de rigidification 7 permettent également d'assurer l'arrêt en translation de la coupelle 4 sur la partie tubulaire externe 3, et donc le positionnement de la coupelle 4 sur la partie tubulaire externe 3, et peuvent éventuellement, en outre, faciliter la fixation de la coupelle 4 sur la partie tubulaire externe 3, en recevant éventuellement des moyens de fixation de la coupelle 4 sur la partie tubulaire externe 3.

Avantageusement, et comme visible plus particulièrement sur les exemples de réalisation des figures 1 et 3, lesdites nervures de rigidification 7 sont ménagées d'un seul tenant avec la partie tubulaire externe 3 en matériau composite.

Une pluralité de nervures de rigidification 7, par exemple entre trois et cinq nervures de rigidification 7 peuvent être prévues, réparties circulairement autour de l'axe A3 de la partie tubulaire externe 3, afin d'encaisser et de répartir au mieux les efforts reçus par ladite coupelle 4, et notamment ceux orientés selon l'axe A3 de la partie tubulaire externe 3.

Selon un mode de réalisation, une portion d'extrémité inférieure 26 de la section tubulaire T2 de la partie interne 2, au niveau de l'extrémité inférieure E2i, s'étendant depuis ladite extrémité inférieure E2i est de diamètre D26 réduit par rapport au diamètre D2 du reste de la section tubulaire T2, un bouchon 27, de diamètre extérieur D27 strictement supérieur au diamètre D26 de la portion d'extrémité inférieure 26 de la section tubulaire T2, étant fixé au niveau de ladite extrémité inférieure E2i, de sorte à former une cavité circulaire 28, au niveau de l'extrémité inférieure E2i de la section tubulaire T2, remplie par le matériau composite de la partie tubulaire externe 3.

Grâce à cette disposition avantageuse de l'invention, comme visible plus particulièrement sur l'exemple de réalisation de la figure 3, le matériau composite de la partie tubulaire externe 3 peut venir se loger dans ladite cavité circulaire 28, lors du surmoulage de la partie tubulaire externe 3 sur la partie interne 2 au cours de la réalisation du corps d'amortisseur 1 selon l'invention, ce qui va assurer l'immobilisation en translation de la partie tubulaire externe 3 par rapport à la partie interne 2 selon l'axe A3 de la partie tubulaire externe 3.

La conception du corps d'amortisseur 1 selon l'invention s'en trouve ainsi simplifiée, et notamment par rapport aux corps d'amortisseur de l'état de la technique, dans lesquels l'extrémité inférieure de la section tubulaire de la partie interne est fixée à l'extrémité inférieure de la partie tubulaire externe, ce qui permet notamment de réduire son temps de réalisation et son coût de revient.

Comme visible plus particulièrement sur l'exemple de réalisation de la figure 7, afin de simplifier la réalisation de ladite portion d'extrémité inférieure 26 sur la section tubulaire T2 de la partie interne 2, ladite portion d'extrémité inférieure 26 peut comprendre une première section conique dont le diamètre varie de D2 à D26, et une deuxième section cylindrique de diamètre D26.

Le bouchon 27 peut être un bouchon de forme globalement cylindrique, également réalisé en matériau métallique, et notamment dans le même matériau que la section tubulaire T2 de la partie interne 2.

Le bouchon 27 peut comporter un taraudage interne destiné à coopérer par vissage avec un filet externe sur ladite portion d'extrémité inférieure 26 de la section tubulaire T2 de la partie interne 2, afin d'assurer la fixation du bouchon 27 sur ladite portion d'extrémité inférieure 26.

Alternativement, le bouchon 27 peut être fixé sur ladite portion d'extrémité inférieure 26 par tout autre moyen connu de l'Homme du métier, comme par exemple par soudage.

Alternativement, et sans sortir du cadre de la présente invention, ladite section tubulaire T2 de la partie interne 2 peut être fermée au niveau de son extrémité inférieure, et une telle cavité circulaire 28 réalisée directement sur ladite section tubulaire T2 par un procédé de repoussage.

L'invention concerne également un amortisseur de train avant de véhicule comprenant :
- un corps d'amortisseur 1 selon l'un des modes de réalisation décrit précédemment,
- un piston fixé sur une tige de piston.

Le piston coulisse à l'intérieur de la section tubulaire T2 de la partie interne 2 dudit corps d'amortisseur 1.

A cet effet, et notamment dans le cas d'un amortisseur bitube, le piston est prévu pour coulisser dans un tube positionné à l'intérieur de la partie interne 2 du corps d'amortisseur 1 selon l'invention.

Le corps d'amortisseur 1 peut avantageusement être configuré comme une jambe de force, notamment dans le cas du montage de l'amortisseur en suspension de type « Macpherson », le corps d'amortisseur 1 étant configuré de sorte à encaisser des efforts importants.

Avantageusement, le train avant de véhicule peut comprendre deux amortisseurs pour chacune des deux roues du train avant, avec chacun un corps d'amortisseur 1 selon l'un des modes de réalisation décrit précédemment.

L'invention trouve une application particulièrement avantageuse pour un train avant de véhicule automobile, et notamment un véhicule léger, mais peut être également employé pour tout autre type de véhicule, comme par exemple un véhicule poids-lourd, ou encore un motocycle.

Naturellement, d'autres modes de réalisation auraient pu être envisagés par l'Homme du métier sans pour autant sortir du cadre de l'invention définie par les revendications ci-après.

### Liste des signes de référence

1. Corps d'amortisseur
2. Partie interne
D2. Diamètre
E2i. Extrémité inférieure
E2s. Extrémité supérieure
T2. Section tubulaire
21. Portion supérieure
22. Portion de rigidification
E22. Epaisseur
23. Portion de fixation
24 portion fonctionnelle
25. Plot
E25. Extrémité distale
L25. Longueur
26. Portion d'extrémité inférieure
D26. Diamètre
27. Bouchon,
D27. Diamètre extérieur
28. Cavité circulaire
3. Partie tubulaire externe
A3. Axe
E3. Epaisseur
E3i. Extrémité inférieure
E3s. Extrémité supérieure
31. Chape
32. Patte de fixation
33. Aile
E33. Epaisseur
F33. Face plane
34. Perçage traversant
4. Coupelle
E4. Epaisseur
41. Ouverture
42. Face supérieure
43 Face inférieure
44. Siège
5. Insert métallique
E5.Epaisseur
6. Bague métallique
E6. Extrémité longitudinale
L6. Longueur
7. Nervure de rigidification

## Revendications

1. Corps d'amortisseur (1) pour un amortisseur de train avant de véhicule comprenant :
- une partie interne (2) comprenant une section tubulaire (T2) présentant une extrémité supérieure (E2s) et une extrémité inférieure (E2i), réalisée en matériau métallique,
- une partie tubulaire externe (3) réalisée en matériau composite, présentant une extrémité supérieure (E3s) et une extrémité inférieure (E3i), surmoulée sur la section tubulaire de ladite partie interne (2), en particulier de telle sorte qu'une portion supérieure (21) de la section tubulaire (T2) de la partie interne (2), au niveau de son extrémité supérieure (E2s), soit positionnée entièrement à l'extérieur de ladite partie tubulaire externe (3),
ladite partie tubulaire externe (3) comportant une chape (31), au niveau de son extrémité inférieure (E3i), comportant deux ailes (33) sensiblement parallèles, configurée de sorte à être solidarisées à un pivot de roue du train avant du véhicule,
une coupelle (4) définissant une surface d'appui pour un ressort de suspension étant positionnée sur ladite partie tubulaire externe (3), à proximité de l'extrémité supérieure (E3s),
**caractérisé en ce que** :
- ladite coupelle (4) est réalisée en matériau métallique, et/ou
- ladite partie interne (2) comporte une portion de rigidification (22), réalisée en matériau métallique, configurée de sorte à être recouverte par le matériau composite de ladite partie tubulaire externe (3), au niveau de la chape (31) et s'étendant en insert dans le composite des deux ailes (33) de la chape (31).

2. Corps d'amortisseur (1) selon la revendication 1 dans lequel ladite partie interne (2) comporte ladite portion de rigidification (22), réalisée en matériau métallique, configurée de sorte à être recouverte intégralement par le matériau composite de ladite partie tubulaire externe (3), au niveau de la chape(31).

3. Corps d'amortisseur selon l'une des revendications 1 à 2, dans lequel la coupelle (4) est réalisée dans une tôle métallique d'épaisseur (E4) comprise entre 0,5 mm et 3 mm, de préférence entre 1 et 2 mm.

4. Corps d'amortisseur (1) selon l'une des revendications 1 à 3, dans lequel ladite portion de rigidification (22) est réalisée sous la forme d'une tôle métallique amovible, avec une portion de fixation (23) configurée de sorte à venir enserrer la section tubulaire de ladite partie interne (2) et une portion fonctionnelle (24) configurée de sorte à être recouverte intégralement par le matériau composite de la chape (31) de la partie tubulaire externe (3).

5. Corps d'amortisseur (1) selon l'une des revendications 1 à 4, dans lequel au moins un plot (25) est ménagé en saillie sur ladite partie interne (2), en particulier sur ladite portion de rigidification (22), à proximité de ladite extrémité inférieure (E2i), configuré de sorte à permettre de s'assurer du recouvrement de la partie interne (2) par le matériau composite de la partie tubulaire externe (3), lors du moulage de la partie tubulaire externe (3) sur la partie interne (2), avec une épaisseur (E3) au moins égale à la longueur (L25) du plot (25).

6. Corps d'amortisseur (1) selon l'une des revendications 1 à 5, dans lequel ladite partie tubulaire externe (3) comporte, à proximité de l'extrémité supérieure (E3s), une patte de fixation (32), configurée de sorte à être solidarisée à une barre anti-dévers du train avant du véhicule, ladite patte de fixation (32) comprenant un insert (5) en matériau métallique, recouvert intégralement par le matériau composite de ladite patte de fixation (32).

7. Corps d'amortisseur (1) selon l'une des revendications 1 à 6, dans lequel chacune desdites ailes (33) comporte deux face planes (F33) parallèles, deux perçages traversant (34), de forme sensiblement cylindrique, s'étendant entre les deux faces planes (F33) parallèles étant prévues dans chacune des ailes (33), une bague métallique (6), de forme sensiblement cylindrique, étant positionnée et maintenue à force à l'intérieur de chacun des perçages traversant (34), de sorte que chacune des extrémités longitudinales (E6) de ladite bague métallique (6) se trouve en retrait à l'intérieur de chacune des ailes (33), entre les deux faces planes (F33).

8. Corps d'amortisseur (1) selon l'une des revendications 1 à 7, comprenant ladite coupelle métallique, et dans lequel des nervures de rigidification (7) sont ménagées sur ladite partie tubulaire externe (3), à proximité de l'extrémité supérieure (E3s), lesdites nervures de rigidification (7) étant configurées de sorte à recevoir en appui une face inférieure (43) de ladite coupelle (4) métallique.

9. Corps d'amortisseur selon l'une des revendications 1 à 8 comprenant ladite portion de rigidification (22) et dans lequel la partie en matériau composite de la chape (31) présente, au niveau de chaque aile (33), une ou plusieurs cavités (35) s'étendant partiellement suivant l'épaisseur (E33) de ladite aile.

10. Corps d'amortisseur selon l'une des revendications 1 à 9, dans lequel une portion d'extrémité inférieure (26) de la section tubulaire (T2) de la partie interne (2), au niveau de l'extrémité inférieure (E2i), s'étendant depuis ladite extrémité inférieure (E2i) est de diamètre (D26) réduit par rapport au diamètre (D2) du reste de la section tubulaire (T2), un bouchon (27), de diamètre extérieur (D27) strictement supérieur au diamètre (D26) de la portion d'extrémité inférieure (26) de la section tubulaire (T2), étant fixé au niveau de ladite extrémité inférieure (E2i), de sorte à former une cavité circulaire (28), au niveau de l'extrémité inférieure (E2i) de la section tubulaire (T2), remplie par le matériau composite de la partie tubulaire externe (3).

11. Amortisseur de train avant de véhicule comprenant :
- un corps d'amortisseur (1) selon l'une des revendications 1 à 10,
- un piston fixé sur une tige de piston,
dans lequel, le piston coulisse à l'intérieur de la section tubulaire de la partie interne (2) dudit corps d'amortisseur (1).

## Patentansprüche

1. Dämpferkörper (1) für einen Fahrzeugvorderachsendämpfer, der Folgendes umfasst:
- einen inneren Teil (2), der einen Rohrteilabschnitt (T2) umfasst, der ein oberes Ende (E2s) und ein unteres Ende (E2i) aufweist, der aus einem metallischen Material hergestellt ist,
- einen äußeren Rohrteil (3), der aus Verbundmaterial hergestellt ist, der ein oberes Ende (E3s) und ein unteres Ende (E3i) aufweist, der auf dem Rohrteilabschnitt des inneren Teils (2) aufgeformt ist, insbesondere derart, dass ein oberer Abschnitt (21) des Rohrteilabschnitts (T2) des inneren Teils (2) auf der Ebene seines oberen Endes (E2s) vollständig außerhalb des äußeren Rohrteils (3) positioniert ist,
wobei der äußere Rohrteil (3) eine Gabel (31) auf der Ebene seines unteren Endes (E3i) aufweist, die zwei im Wesentlichen parallele Flügel (33) umfasst, die derart konzipiert sind, dass sie mit einem Vorderachsenradbolzen des Fahrzeugs fest verbunden sind,
eine Schale (4), die eine Oberflächenauflage für eine Tragfeder definiert, die auf dem äußeren Rohrteil (3) in der Nähe des oberen Endes (E3s) positioniert ist, **dadurch gekennzeichnet, dass**:
- die Schale (4) aus einem metallischen Material hergestellt ist, und/oder
- der innere Teil (2) einen Versteifungsabschnitt (22) umfasst, der aus einem metallischen Material hergestellt ist, der derart konfiguriert ist, dass er von dem Verbundmaterial des äußeren Rohrteils (3) auf der Ebene der Gabel (31) abgedeckt ist und sich als Einsatz in das Verbundmaterial der zwei Flügel (33) der Gabel (31) erstreckt.

2. Dämpferkörper (1) nach Anspruch 1, wobei der innere Teil (2) den Versteifungsabschnitt (22) umfasst, der aus metallischem Material hergestellt ist, der derart konfiguriert ist, dass er vollständig von dem Verbundmaterial des äußeren Rohrteils (3) auf der Ebene der Gabel (31) abgedeckt ist.

3. Dämpferkörper nach einem der Ansprüche 1 bis 2, wobei die Schale (4) aus einem Metallblech mit einer Dicke (E4) hergestellt ist, die zwischen 0,5 mm und 3 mm, bevorzugt zwischen 1 und 2 mm, liegt.

4. Dämpferkörper (1) nach einem der Ansprüche 1 bis 3, wobei der Versteifungsabschnitt (22) in der Form eines abnehmbaren Metallblechs hergestellt ist, mit einem Befestigungsabschnitt (23), der derart konfiguriert ist, dass er den Rohrteilabschnitt des inneren Teils (2) einspannt, und einem Funktionsabschnitt (24), der derart konfiguriert ist, dass er von dem Verbundmaterial der Gabel (31) des äußeren Rohrteils (3) vollständig abgedeckt ist.

5. Dämpferkörper (1) nach einem der Ansprüche 1 bis 4, wobei mindestens ein Kontakt (25) auf dem inneren Teil (2) vorragend angelegt ist, insbesondere auf dem Versteifungsabschnitt (22) in der Nähe des unteren Endes (E2i), wobei der Kontakt derart konfiguriert ist, dass er es erlaubt, das Abdecken des inneren Teils (2) durch das Verbundmaterial des äußeren Rohrteils (3) beim Formen des äußeren Rohrteils (3) auf dem inneren Teil (2) mit einer Dicke (E3) von mindestens gleich der Länge (L25) des Kontakts (25) sicherzustellen.

6. Dämpferkörper (1) nach einem der Ansprüche 1 bis 5, wobei der äußere Rohrteil (3) in der Nähe des oberen Endes (E3s) eine Befestigungspratze (32) umfasst, die derart konfiguriert ist, dass sie mit einer Querstabilisierungsstange der Vorderachse des Fahrzeugs fest verbunden ist, wobei die Befestigungspratze (32) einen Einsatz (5) aus metallischem Material umfasst, der vollständig von dem Verbundmaterial der Befestigungspratze (32) abgedeckt ist.

7. Dämpferkörper (1) nach einem der Ansprüche 1 bis 6, wobei jeder der Flügel (33) zwei flache parallele Flächen (F33) umfasst, wobei zwei durchgehende Bohrungen (34) mit im Wesentlichen zylindrischer Form, die sich zwischen den zwei flachen parallelen Ebenen (F33) erstrecken, in jedem der Flügel (33) vorgesehen sind, wobei ein metallischer Ring (6) mit im Wesentlichen zylindrischer Form im Inneren jeder der durchgehenden Bohrungen (34) derart positioniert und kraftschlüssig gehalten wird, dass jedes der Längsenden (E6) des metallischen Rings (6) in dem Inneren jedes der Flügel (33) zwischen den zwei ebenen Flächen (F33) im Rücksprung liegt.

8. Dämpferkörper (1) nach einem der Ansprüche 1 bis 7, der die metallische Schale umfasst, und wobei Versteifungsrippen (7) auf dem äußeren Rohrteil (3) in der Nähe des oberen Endes (E3s) angelegt sind, wobei die Versteifungsrippen (7) derart konfiguriert sind, dass sie in Auflage eine untere Fläche (43) der metallischen Schale (4) aufnehmen.

9. Dämpferkörper nach einem der Ansprüche 1 bis 8, der den Versteifungsabschnitt (22) umfasst, und wobei der Teil aus Verbundmaterial der Gabel (31) auf der Ebene jedes Flügels (33) einen oder mehrere Hohlräume (35) aufweist, die sich teilweise gemäß der Dicke (E33) des Flügels erstrecken.

10. Dämpferkörper nach einem der Ansprüche 1 bis 9, wobei ein unterer Endabschnitt (26) des Rohrteilabschnitts (T2) des inneren Teils (2), der sich auf der Ebene des unteren Endes (E2i) von dem unteren Ende (E2i) erstreckt, einen verringerten Durchmesser (D26) in Bezug auf den Durchmesser (D2) des Rests des Rohrteilabschnitts (T2) aufweist, wobei ein Stopfen (27) mit einem Außendurchmesser (D27), der strikt größer ist als der Durchmesser (D26) des unteren Endabschnitts (26) des Rohrteilabschnitt (T2), auf der Ebene des unteren Endes (E2i) derart befestigt ist, dass ein kreisförmiger Hohlraum (28) auf der Ebene des unteren Endes (E2i) des Rohrteilabschnitts (T2), der mit dem Verbundmaterial des äußeren Rohrteils (3) gefüllt ist, gebildet wird.

11. Fahrzeugvorderachsendämpfer, der Folgendes umfasst:
- einen Dämpferkörper (1) nach einem der Ansprüche 1 bis 10
- einen Kolben, der an einer Kolbenstange befestigt ist,
wobei der Kolben in dem Inneren des Rohrteilabschnitts des inneren Teils (2) des Dämpferkörpers (1) gleitet.

## Claims

1. A shock absorber body (1) for a vehicle front-axle shock absorber comprising:
- an inner portion (2) comprising a tubular section (T2) having an upper end (E2s) and a lower end (E2i), made of metal material,
- an outer tubular portion (3) made of composite material, having an upper end (E3s) and a lower end (E3i), overmolded on the tubular section of said inner portion (2), in particular such that an upper portion (21) of the tubular section (T2) of the inner portion (2), at the upper end (E2s) thereof, is positioned entirely outside said outer tubular portion (3),
said outer tubular portion (3) including a yoke (31), at the lower end (E3i) thereof, including two substantially parallel wings (33), configured so as to be secured to a wheel pivot of the front-axle of the vehicle,
a cup (4) defining a bearing surface for a suspension spring being positioned on said outer tubular portion (3), in the vicinity of the upper end (E3s), **characterised in that**:
- said cup (4) is made of metal material, and/or
- said inner portion (2) includes a stiffening portion (22), made of metal material, configured so as to be covered by the composite material of said outer tubular portion (3), at the yoke (31) and extending as an insert in the composite of the two wings (33) of the yoke (31).

2. The shock absorber body (1) according to claim 1, wherein said inner portion (2) includes said stiffening portion (22), made of metal material, configured so as to be completely covered by the composite material of said outer tubular portion (3), at the yoke (31).

3. The shock absorber body according to one of claims 1 to 2, wherein the cup (4) is made of a sheet metal of a thickness (E4) comprised between 0.5 mm and 3 mm, preferably between 1 and 2 mm.

4. The shock absorber body (1) according to one of claims 1 to 3, wherein said stiffening portion (22) is made in the form of a removable sheet metal, with a fastening portion (23) configured so as to enclose the tubular section of said inner portion (2) and a functional portion (24) configured to be completely covered by the composite material of the yoke (31) of the outer tubular portion (3).

5. The shock absorber body (1) according to one of claims 1 to 4, wherein at least one stud (25) is formed protruding from said inner portion (2), in particular from said stiffening portion (22), in the vicinity of said lower end (E2i), configured so as to allow ensuring the covering of the inner portion (2) by the composite material of the outer tubular portion (3), during of the moulding of the outer tubular portion (3) on the inner portion (2), with a thickness (E3) which is at least equal to the length (L25) of the stud (25).

6. The shock absorber body (1) according to one of claims 1 to 5, wherein said outer tubular portion (3) includes, in the vicinity of the upper end (E3s), a fastening tab (32), configured so as to be secured to an anti-roll bar of the front-axle of the vehicle, said fastening tab (32) comprising an insert (5) made of metal material, completely covered by the composite material of said fastening tab (32).

7. The shock absorber body (1) according to one of claims 1 to 6, wherein each of said wings (33) includes two parallel planar faces (F33), two through holes (34), of substantially cylindrical shape, extending between the two parallel planar faces (F33) being provided in each of the wings (33), a metal ring (6), of substantially cylindrical shape, being positioned and forcibly held inside each of the through holes (34), such that each of the longitudinal ends (E6) of said metal ring (6) is recessed inside each of the wings (33), between the two planar faces (F33).

8. The shock absorber body (1) according to one of claims 1 to 7, comprising said metal cup, and wherein stiffening ribs (7) are formed on said outer tubular portion (3), in the vicinity of the upper end (E3s), said stiffening ribs (7) being configured so as to receive in support a lower face (43) of said metal cup (4).

9. The shock absorber body according to one of claims 1 to 8, comprising said stiffening portion (22) and wherein the portion made of composite material of the yoke (31) has, at each wing (33), one or more cavities (35) extending partially along the thickness (E33) of said wing.

10. The shock absorber body according to one of claims 1 to 9, wherein a lower end portion (26) of the tubular section (T2) of the inner portion (2), at the lower end (E2i), extending from said lower end (E2i) has a diameter (D26) which is reduced relative to the diameter (D2) of the rest of the tubular section (T2), a plug (27), with an outer diameter (D27) which is strictly greater than the diameter (D26) of the lower end portion (26) of the tubular section (T2), being fastened at said lower end (E2i), so as to form a circular cavity (28), at the lower end (E2i) of the tubular section (T2), filled with the composite material of the outer tubular portion (3).

11. A vehicle front-axle shock absorber comprising:
- a shock absorber body (1) according to one of claims 1 to 10,
- a piston fastened on a piston rod,
wherein, the piston slides inside the tubular section of the inner portion (2) of said shock absorber body (1).
